**Europäisches Patentamt**

**European Patent Office**

**Office européen des brevets**

(19)

(11) Veröffentlichungsnummer: **0 036 603**
**A1**

(12) ## EUROPÄISCHE PATENTANMELDUNG

(21) Anmeldenummer: **81101942.1**

(22) Anmeldetag: **16.03.81**

(51) Int. Cl.³: **G 09 F 9/00**, G 02 F 1/01

(30) Priorität: **25.03.80 DE 3011506**

(43) Veröffentlichungstag der Anmeldung **30.09.81**
**Patentblatt 81/39**

(84) Benannte Vertragsstaaten: **CH FR GB IT LI**

(71) Anmelder: **SIEMENS AKTIENGESELLSCHAFT Berlin
und München, Postfach 22 02 61,
D-8000 München 22 (DE)**

(72) Erfinder: **Freller, Helmut, Steinbergstrasse 34a,
D-8505 Röthenbach/Pegnitz (DE)**
Erfinder: **Mund, Konrad, Dr., Langenbrucker Weg 10,
D-8521 Uttenreuth (DE)**

(54) **Elektrochromes Display.**

(57)  In einem elektrochromen Display mit wenigstens einer WO₃-Elektrode wird als Elektrolyt Propylencarbonat mit einem Gehalt von etwa 1 bis 5 Vol.-% Wasser vorgesehen.

EP 0 036 603 A1

## Elektrochromes Display

Die Erfindung betrifft ein elektrochromes Display mit wenigstens einer $WO_3$-Elektrode und Propylencarbonat als Elektrolyt.

Elektrochrome Zellen eignen sich als großflächige Displays und sie sind Zellen mit Flüssigkristallen (LCD) insbesondere deshalb überlegen, weil der Elektrodenabstand unproblematisch ist. Elektrochrome Displays haben aber eine längere Ansprechzeit. Es wurde deshalb bereits versucht, durch Zusätze in der $WO_3$-Schicht die Diffusion im Festkörper zu beschleunigen. Diese Versuche blieben aber erfolglos.

In elektrochromen Displays mit $WO_3$-Elektroden werden insbesondere Schwefelsäure oder aprotische, d.h. nichtwäßrige Lösungsmittel, wie Propylencarbonat, als Elektrolyt verwendet; im Propylencarbonat beispielsweise ist dabei ein Alkalimetallsalz gelöst, das zur Bronzebildung ($M_x WO_3$) dient. Der aprotische Elektrolyt Propylencarbonat wird deshalb verwendet, weil damit eine höhere Lebensdauer der Zellen erreicht werden kann. Beim Einsatz von Propylencarbonat als Elektrolyt hat sich aber gezeigt, daß damit die Ansprechzeit der elektrochromen Anzeigevorrichtungen noch weiter verlängert wird, d.h. die Informationswechsel pro Zeiteinheit werden geringer.

Aufgabe der Erfindung ist es, ein elektrochromes Display der eingangs genannten Art mit Propylencarbonat als

Bh 2 Koe / 19.3.1980

0036603

Elektrolyt in der Weise auszugestalten, daß die Geschwindigkeit der Anzeige erhöht und somit ein schneller Informationswechsel ermöglicht wird.

Dies wird erfindungsgemäß dadurch erreicht, daß das
Propylencarbonat etwa 1 bis 5 Vol.-% Wasser enthält.
Vorzugsweise beträgt der Wassergehalt des Propylencarbonats etwa 3 Vol.-%.

Propylencarbonat, eine leicht bewegliche organische
Flüssigkeit, ist - in chemischer Hinsicht - 4-Methyl-
1.3-dioxolan-2-on (Summenformel: $C_4H_6O_3$). Diese Verbindung, die physiologisch unbedenklich ist, wird - mit
einem Wassergehalt von etwa 1 bis 5 % - in den erfindungsgemäßen elektrochromen Anzeigevorrichtungen als
Elektrolyt verwendet. Das Propylencarbonat enthält dabei
ferner ein Alkalimetallsalz, vorzugsweise Lithiumperchlorat $LiClO_4$.

Bei der Verwendung von (wasserfreiem) Propylencarbonat
als Elektrolyt in elektrochromen Displays ist die elektrochrome Reaktion in den $WO_3$-Elektroden sehr langsam.
Enthält das Propylencarbonat (PC) dagegen etwa 1 bis
5 Vol.-% Wasser, wie dies in den erfindungsgemäßen Vorrichtungen der Fall ist, so können die Elektroden innerhalb von 0,2 bis 0,3 s eingefärbt werden. Die elektrochemischen Eigenschaften des PC für die Elektroden
ändern sich dabei nicht. Wird der Wassergehalt des PC-
Elektrolyten bis auf 10 Vol.-% erhöht, so bleibt die
schnelle Reaktion zwar erhalten, die Elektroden verlieren dabei jedoch innerhalb von 40 h ihre elektrochromen
Eigenschaften und werden unbrauchbar. Die erfindungsgemäßen elektrochromen Displays ermöglichen somit schnelle
Informationswechsel, ohne daß die Lebensdauer beeinträchtigt wird: Nach einer Betriebsdauer von 1000 h kann
an den $WO_3$-Elektroden kaum eine Änderung festgestellt werden.

Die vorstehend geschilderten Ergebnisse sind nicht zuletzt auch deshalb überraschend und konnten nicht vorhergesehen werden, weil es bekannt ist, daß die Eigenschaften von $WO_3$-Elektroden durch - während des Aufdampfens der $WO_3$-Schicht - eingelagertes Wasser negativ beeinflußt werden.

Die erfindungsgemäßen elektrochromen Displays können einen strukturellen Aufbau haben, wie er an sich bekannt ist. So kann die Arbeits- bzw. Frontelektrode aus einer Glasplatte mit einer transparenten Kontaktschicht, wie $In_2O_3$, und einer elektrochromen $WO_3$-Schicht aufgebaut sein. Die Gegen- bzw. Rückelektrode kann wie die Arbeitselektrode aufgebaut sein, sie kann aber auch aus einer Metallplatte mit einer aufgedampften $WO_3$-Schicht bestehen. Dabei können die Zellen einen symmetrischen Aufbau zeigen, wobei die den Elektrolyten begrenzenden $WO_3$-Schichten etwa gleich dick sind. Vorteilhaft können die Zellen aber auch einen Aufbau entsprechend der deutschen Offenlegungsschrift 29 06 320 besitzen, d.h. unsymmetrisch aufgebaut sein, wobei die $WO_3$-Rückelektrode 2 bis 10 mal dicker ist als die $WO_3$-Frontelektrode.

Anhand von Ausführungsbeispielen soll die Erfindung noch näher erläutert werden.

Die elektrochemischen Untersuchungen wurden in Halbzellen durchgeführt, die aus Glas gefertigt waren. Die Arbeitselektrode bestand aus einer Glasfrontplatte mit einer $In_2O_3$- und einer $WO_3$-Schicht. Als Bezugselektrode diente ein Stück Fasernickel, an dem Lithium abgeschieden worden war. Das handelsübliche Propylencarbonat (PC) wurde durch Destillation oder mittels eines Molekularsiebes (4 $\overset{o}{A}$, Perlform) gereinigt, indem es unter Rühren
für die Dauer von 5 h auf ca. 70°C erwärmt wurde. Als
Elektrolyt diente dann derart gereinigtes PC mit
1 M LiClO$_4$.

In reinem, d.h. wasserfreiem Propylencarbonat stellt
eine frische WO$_3$-Elektrode ein Potential $\varphi$/Li von
3070 mV ein. Wird eine derartige Elektrode durch cyclischen Potentialsprung potentiostatisch belastet, um die
Messungen mit dem praktischen Betrieb in einer elektrochromen Zelle vergleichbar werden zu lassen, so zeigt
sich, daß die Elektrode nur langsam gefärbt wird. Die
elektrochrome Reaktion ist gehemmt und es dauert 20 h
(Temperatur: 22°C), bis die Elektrode sich nicht mehr
verändert.

Die Impedanzmessungen am Potential $\varphi$/Li = 2,4 V ergeben
für $\nu$ = 1 Hz eine Kapazität von 122 F·cm$^{-3}$ und einen
Widerstand $\varrho$ = 2,1·10$^8\Omega$·cm. Diesen Werten kann ein
Diffusionskoeffizient D = 3,7·10$^{-11}$ cm$^2$·s$^{-1}$ für Li im
Festkörper zugeordnet werden.

Bei der Untersuchung von WO$_3$-Elektroden im 1 M LiClO$_4$/
PC-Elektrolyten mit Wassergehalten zwischen 1 und
10 Vol.-% zeigt sich folgendes.

Bei der Verwendung eines PC-Elektrolyten mit einem
Gehalt von 1 % Wasser wird die Elektrode bei der potentiostatischen Belastung von Anfang an stärker eingefärbt als bei wasserfreiem PC. Dabei steigt die Geschwindigkeit der elektrochromen Reaktion mit wachsender
Zyklenzahl an, so daß bereits nach 5 h ein Gleichgewicht erreicht ist.

Bei einem Wassergehalt des PC-Elektrolyten von 3 Vol.-%

steigt die Stromdichte schnell auf 30 mA·cm$^{-2}$ und die $WO_3$-Elektrode wird bei einer Frequenz $\nu$ = 0,05 Hz gut eingefärbt und wieder gebleicht. Bei einer Frequenz von 0,5 Hz ist die Entfärbung nach 0,4 s nahezu abgeschlossen und es zeigt sich, daß die kathodische Reaktion, d.h. die Färbung der Elektrode, der langsame Schritt ist.

Ähnlich schnell verläuft die elektrochrome Reaktion einer $WO_3$-Elektrode in einem PC-Elektrolyten mit einem Gehalt von 5 bzw. 10 Vol.-% $H_2O$. Bei einem $H_2O$-Gehalt von 10 % nimmt aber die Farbtiefe mit wachsender Zyklenzahl ab und nach 40 h ist es nicht mehr möglich, die Elektrode einzufärben.

Diese Ergebnisse zeigen, daß sich bei einem elektrochromen Display hinsichtlich der Geschwindigkeit des Informationswechsels die günstigsten Bedingungen bei einem PC-Elektrolyten mit einem Wassergehalt etwa zwischen 1 und 5 Vol.-% ergeben.

In der Tabelle 1 sind für die potentiostatischen Messungen (2,2 V $\leq \varphi$/Li $\leq$ 3,2 V; 22$^{\circ}$C) charakteristische Werte der Ladung q, die bei jedem zyklischen Potentialsprung ausgetauscht wird, zusammengefaßt; die Werte gelten für eine Frequenz $\nu$ = 0,05 Hz.

0036603

Tabelle 1

| $H_2O$-Gehalt im PC-Elektrolyten | Betriebsdauer | $q$, mC/cm$^2$ |
|---|---|---|
| 0 % | 70 h | 6 |
| 1 % | 5 h | 14 |
| 3 % | 1 h | 47 |
|  | 17 h | 16,7 |
|  | 70 h | 13,3 |
|  | 1000 h | 14,4 |
| 10 % | 22 h | 5,6 |

Beschränkt man sich auf die Elektroden, die im PC-Elektrolyten mit 0 %, 1 % und 3 % $H_2O$ betrieben werden, - der PC-Elektrolyt mit 10 % $H_2O$ wird unberücksichtigt gelassen, da hierbei die Elektroden bereits nach 40 h unbrauchbar sind - so zeigt sich, daß die Ladung - bei vergleichbarer Betriebsdauer - mit dem Wassergehalt steigt. Beim Betrieb von Elektroden im PC-Elektrolyten mit 3 Vol.-% $H_2O$ zeigt sich ferner, daß zwischen den Messungen bei 70 und 1000 h kaum Unterschiede bestehen.

Die Ergebnisse der Impedanzmessungen (22$^o$C; $\varphi$/Li = 2,4 V) sind - in Form der Kapazität c und des Diffusionskoeffizienten D - in Tabelle 2 aufgeführt.

Tabelle 2

| $H_2O$-Gehalt im PC-Elektrolyten, Betriebsdauer | $c$, F·cm$^{-3}$ | $D$, cm$^2$·s$^{-1}$ | $\tau$, s |
|---|---|---|---|
| 0 %, 70 h | 122 | $3{,}7 \cdot 10^{-11}$ | 21,5 |
| 1 %, 70 h | 159 | $3{,}1 \cdot 10^{-10}$ | 2,6 |
| 3 %, 17 h | 362 | $3{,}0 \cdot 10^{-9}$ | 0,27 |
| 10 %, 22 h | 8,8 | $8{,}6 \cdot 10^{-10}$ |  |

0036603

Bleibt der Wert für den PC-Elektrolyten mit 10 Vol.-% $H_2O$ unberücksichtigt, - die Ergebnisse zeigen im übrigen, daß hierbei die Zentren für die Bildung der Bronze verschwinden - so ergibt sich, daß die Kapazität mit dem Wassergehalt ansteigt. Die Unterschiede sind aber als gering zu werten, da die Kapazität frequenzabhängig ist und bei langsamer elektrochromer Reaktion etwas niedriger ausfällt. Beachtlich ist aber der Einfluß des Wassergehaltes auf den Diffusionskoeffizienten: Wenn man die Ergebnisse bei einem $H_2O$-Behalt von 0 %, 1 % und 3 % betrachtet, so steigt D jeweils etwa um eine Zehnerpotenz.

Mit dem Diffusionskoeffizienten kann man - nach $\tau = d^2/\pi \cdot D$ (mit d = 0,5 $\mu$m, wobei d die Dicke der $WO_3$-Schicht ist) - auch die Zeit $\tau$ für einen Informationswechsel definieren. Bei PC/3 % $H_2O$ ergibt sich $\tau$ dabei zu 0,27 s bei $D = 3 \cdot 10^{-9}$ $cm^2 \cdot s^{-1}$; dieser Diffusionskoeffizient ist lediglich um den Faktor 6 kleiner als bei einem $H_2SO_4$-Elektrolyten.

3 Patentansprüche

0036603

## Patentansprüche

1. Elektrochromes Display mit wenigstens einer WO$_3$-Elektrode und Propylencarbonat als Elektrolyt, d a d u r c h   g e k e n n z e i c h n e t ,  daß das Propylencarbonat etwa 1 bis 5 Vol.-% Wasser enthält.

2. Elektrochromes Display nach Anspruch 1,   d a - d u r c h   g e k e n n z e i c h n e t ,  daß der Wassergehalt des Propylencarbonats etwa 3 Vol.-% beträgt.

3. Elektrochromes Display nach Anspruch 1 oder 2, d a d u r c h   g e k e n n z e i c h n e t ,  daß das Propylencarbonat Lithiumperchlorat enthält.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 709 086 (SHARP) <br><br> + Seite 5, letzter Absatz - Seite 6, Zeile 4 + <br><br> ---- | 3 |

**KLASSIFIKATION DER ANMELDUNG (Int. Cl.³)**

G 09 F 9/00

G 02 F 1/01

**RECHERCHIERTE SACHGEBIETE (Int. Cl.³)**

G 09 F 9/00

G 02 F 1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort <br> VIENNA | Abschlußdatum der Recherche <br> 12-06-1981 | Prüfer <br> BENISCHKA |
|---|---|---|

EPA form 1503.1   06.78